# EUROPÄISCHE PATENTSCHRIFT

(11) **EP 1 498 321 B1**
(45) Veröffentlichungstag und Bekanntmachung des Hinweises auf die Patenterteilung: **17.05.2006**
(21) Anmeldenummer: 04090370.0
(22) Anmeldetag: 22.03.1999
(51) Int. Cl.: B60R 21/26

(54) **Airbagvorrichtung für Kraftfahrzeuge**
Airbag device for motor vehicles
Dispositif à coussin gonflable pour véhicules automobiles

(30) Priorität: 24.03.1998 DE 19812915
(43) Veröffentlichungstag der Anmeldung: 19.01.2005
(62) Teilanmeldung aus: 99105787.8
(73) Patentinhaber: TAKATA-PETRI (Ulm) GmbH, 89081 Ulm (DE)
(72) Erfinder: Einsiedel, Heinrich, 89007 Ulm (DE); Heudorfer, Benedikt, 89278 Nersingen (DE); Glöckler, Oliver, 89278 Nersingen (DE); Klaiber, Uwe, 89518 Heidenheim (DE)
(74) Vertreter: Müller, Wolfram Hubertus

(56) Entgegenhaltungen:
- EP-A- 0 940 304
- DE-A- 1 956 677
- PATENT ABSTRACTS OF JAPAN Bd. 1997, Nr. 07, 31. Juli 1997 (1997-07-31) -& JP 09 086332 A (TOYO TIRE &RUBBER CO LTD), 31. März 1997 (1997-03-31)
- PATENT ABSTRACTS OF JAPAN Bd. 1995, Nr. 11, 26. Dezember 1995 (1995-12-26) -& JP 07 223504 A (TOYOTA MOTOR CORP), 22. August 1995 (1995-08-22)

## Beschreibung

Die Erfindung betrifft eine Airbagvorrichtung für Kraftfahrzeuge, insbesondere eine Seitenairbagvorrichtung nach dem Oberbegriff des Patentanspruchs 1.

Derartige Airbagvorrichtungen sind in verschiedenen Ausführungen bekannt (siehe z.B. DE-OS 22 22 621; WO 96/26087; DE 196 13 133 A1; DE 196 13 095 A1). Die Aufgabe des Gasfüllrohrs besteht dabei darin, das vom Gasgenerator bei Zündung erzeugte Druckgas in gewünschter Weise auf die einzelnen Bereiche des sich über eine gewisse Länge erstreckenden Gassackes zu verteilen.

Die Aufgabe der vorliegenden Erfindung besteht darin, eine Airbagvorrichtung der eingangs genannten Gattung zu schaffen, bei der das Gasfüllrohr mit einfachen und rationellen Fertigungstechniken herstellbar ist und gleichwohl auf einfache Weise eine definierte Gaszufuhr zu den einzelnen Bereichen des Gassackes gewährleistet werden kann.

Zur Lösung dieser Aufgabe sind die Merkmale des kennzeichnenden Teiles des Anspruches 1 vorgesehen. Vorteilhafte Weiterbildungen der Erfindung entnimmt man den Unteransprüchen.

Der Erfindungsgedanke ist also darin zu sehen, dass man die Gasaustrittsöffnungen durch einen einfachen Schneid- und Eindrückvorgang herstellt, wobei durch die Länge und Richtung des Einschnittes sowie das Ausmaß der Eindrückungen die aus jeder einzelnen Gasaustrittsöffnung ausströmende Gasmenge genau voreingestellt werden kann.

Erfindungsgemäß verlaufen die Einschnitte im wesentlichen parallel zur Rohrachse und sind pro Gasaustrittsöffnung im geringen Abstand zwei Einschnitte vorgesehen, wobei entweder die Einrückungen zwischen den Einschnitten vorgesehen sind und das Rohrmaterial außerhalb der Einschnitte unverformt ist oder die Eindrückungen außerhalb der Einschnitte vorgesehen sind und das Rohrmaterial zwischen den Einschnitten unverformt ist.

Die Erfindung wird im folgenden beispielsweise anhand der Zeichnung beschrieben; in dieser zeigt:
- Figur 1: eine schematische Seitenansicht einer Seiten-Airbagvorrichtung,
- Figur 2: die Einzelheit II von Figur 1 in vergrößertem Maßstab,
- Figur 3: eine Draufsicht eines Gasfüllrohres im Bereich einer Gasaustrittsöffnung 13 im vergrößerten Maßstab,
- Figur 4: eine perspektivische Ansicht des Endbereiches eines für die Airbagvorrichtung vorgesehenen Gasfüllrohres,
- Figur 5: eine Draufsicht eines Teiles einer Ausführungsform eines Gasfüllrohres,
- Figur 6: einen schematischen Schnitt nach Linie VI-VI in Figur 5,
- Figur 7: eine Draufsicht auf einen Teil einer Ausführungsform eines erfindungsgemäßen Gasfüllrohres mit zwei in Längsrichtung im Abstand parallel zueinander angeordneten Einschnitten,
- Figur 8: eine schematische Schnittansicht nach Linie VIII-VIII in Figur 7,
- Figur 9: eine Seitenansicht des Gegenstandes der Figur 7,
- Figur 10: eine Draufsicht eines Teils einer Ausführungsform eines Gasfüllrohres,
- Figur 11: eine schematische Schnittansicht nach Linie XI-XI in Figur 10,
- Figur 12: eine schematische Schnittansicht nach Linie XII-XII in Figur 11,
- Figur 13: eine Draufsicht auf einen Teil einer weiteren Ausführungsform eines erfindungsgemäßen Gasfüllrohres.
- Figur 14: eine schematische Schnittansicht nach Linie XIV-XIV in Figur 13.

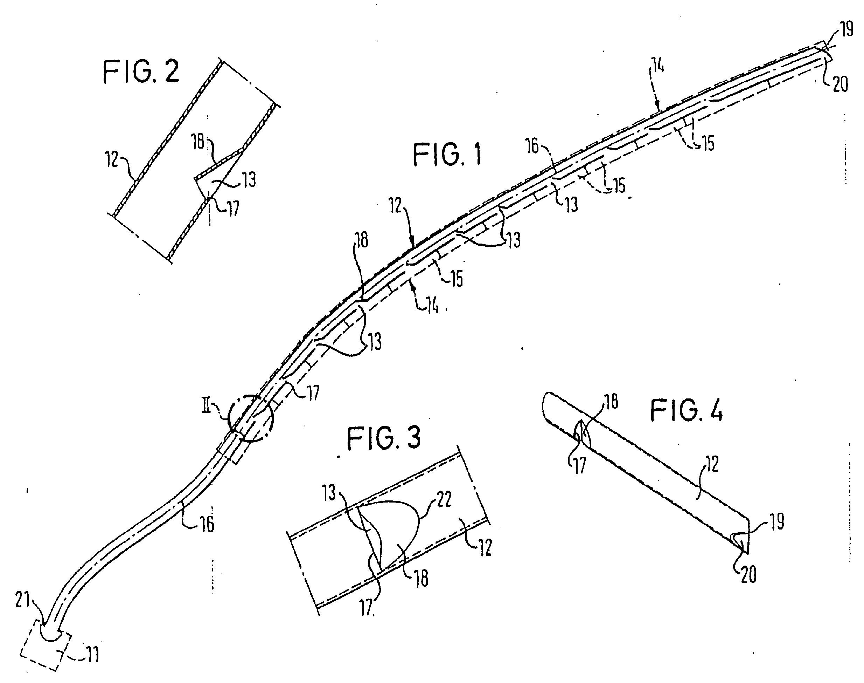

Die Figuren 1 bis 6 und 10 bis 12 beziehen sich nicht auf die Erfindung und dienen lediglich der Erläuterung des Hintergrundes der Erfindung.

Nach der Zeichnung-weist das generatorseitige Ende eines Gasfüllrohres 12 einen Flansch 21 auf, mittels dessen es drehgesichert an einem gestrichelt angedeuteten Gasgenerator 11 befestigt ist.

Das Gasfüllrohr 12 ist entlang des Dachholmes eines nicht dargestellten Kraftfahrzeuges verlegt und ist gegebenenfalls erst in einem gewissen Abstand vom Gasgenerator 11 mit einer Reihe hintereinander angeordneter Gasaustrittsöffnungen 13 versehen. Im Bereich der Gasaustrittsöffnungen 13 ist das Gasfüllrohr 12 mit einem nur gestrichelt angedeuteten, aufblähbaren Gassack 14 verbunden, der aus einzelnen Zellen 15 bestehen kann, von denen jede einer Gasaustrittsöffnung 13 zugeordnet ist.

Wie man insbesondere den Figuren 2 bis 4 entnimmt, sind die Gasaustrittsöffnungen 13 durch quer zur Rohrachse 16 verlaufende Einschnitte 17 und Eindrückungen 18 gebildet, die in der Rohrwand auf der vom Generator 11 abgewandten Seite der Einschnitte 17 vorgenommen sind. Auf diese Weise bilden die Eindrückungen 18 Leitflächen für das vom Gasgenerator 11 in das Gasfüllrohr 12 strömende Gas, welches auf diese Weise im Bereich der einzelnen Gasaustrittsöffnungen 13 definiert in die einzelnen Zellen 15 des Gassackes 14 ausgebläsen wird.

Durch entsprechende Länge der Einschnitte 17 und Tiefe der Eindrükkungen 18 kann die an der jeweiligen Gasaustrittsöffnung 13 austretende Gasmenge genau vorbestimmt werden. Insbesondere sollte erfindungsgemäß vorgesehen sein, daß die Eindrückungen in Generatornähe flacher und in den vom Gasgenerator abgewandten Bereichen tiefer sind, damit auch noch im Bereich des Rohrendes ausreichend Gas für das Eintreten in den Gassack 14 zur Verfügung steht.

Am vom Generator 11 abgewandten Ende kann das Gasfüllrohr 12 verschlossen sein, verjüngt sein oder eine Auslassöffnung haben. Beim gezeigten Ausführungsbeispiel befindet sich jedoch auch am Ende des Gasfüllrohres 12 eine Eindrückung 19, die so bemessen ist, dass auch am vom Generator 11 abgewandten Ende des Gasfüllrohres 12 noch eine Endöffnung 20 genau definierter Größe vorhanden ist, die für das Aufblähen der letzten Zelle 15 des Gassackes dient.

In Figur 3 ist auch die Übergangslinie 22 zwischen der Eindrückung 18 und dem unverformten Teil des Gasfüllrohres 12 eingezeichnet, welche zur Schaffung besonders günstiger Strömungsverhältnisse parabelartig ausgebildet ist.

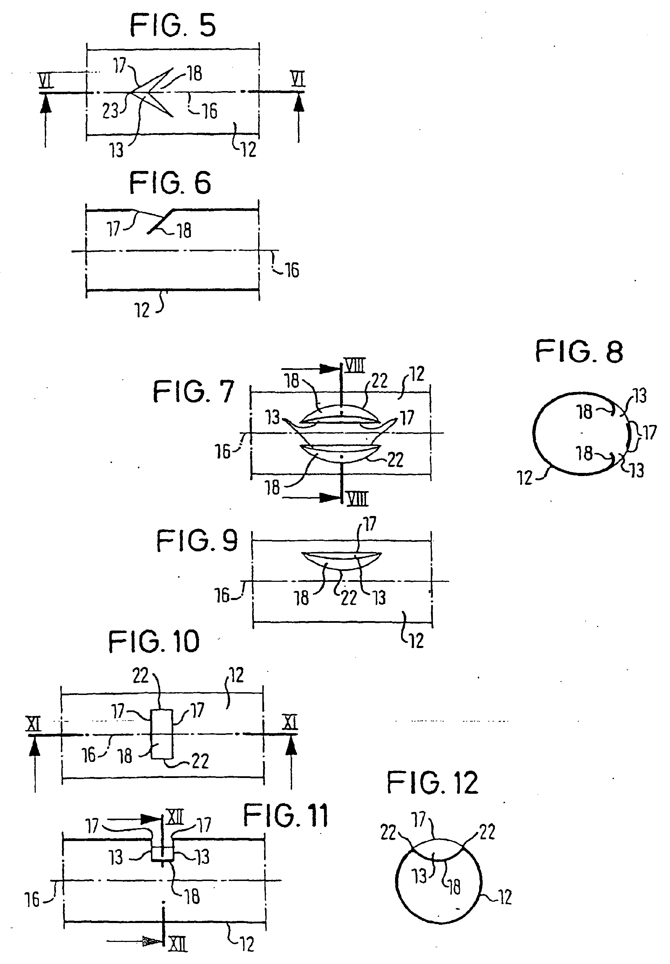

Bei der Ausgestaltung nach Figur 5 ist jede Gasaustrittsöffnung 13 durch einen V-förmigen Einschnitt 17 und eine innerhalb der Schenkel des V vorgenommene Eindrückung 18 gebildet. Die Spitze 23 des V weist dabei zu dem Ende des Gasfüllrohres 12, an dem der Gasgenerator 11 angeordnet ist.

Je nachdem, wie tief die Eindrückung 18 zum Inneren des Gasfüllrohres 12 hin abgebogen ist, kann die aus der Gasaustrittsöffnung 13 austretende Gasmenge genau gesteuert werden.

Beim Ausführungsbeispiel der Erfindung nach den Figuren 7 bis 9 sind im Bereich der Gasaustrittsöffnungen 13 jeweils zwei parallel zur Rohrachse 16 verlaufende Einschnitte 17 in geringem Umfangsabstand voneinander vorgesehen. Das Rohrmaterial zwischen den Einschnitten 17 ist unverformt, während außerhalb der Einschnitte 17 die Eindrückungen 18 vorgenommen sind, um die Gasaustrittsöffnungen 13 definierter Größe zu schaffen. In den Figuren 7 und 9 sind auch wieder die Übergangslinien 22 zwischen den Eindrückungen 18 und dem unverformten Rohrmaterial eingezeichnet, welche einen stetig gekrümmten Verlauf haben.

Bei der Ausgestaltung nach den Figuren 10 bis 12 sind pro Gasaustrittsöffnung zwei in Axialrichtung gering beabstandete Einschnitte: 17 parallel zueinander vorgesehen. Zwischen den beiden Einschnitten 17 wird die Eindrückung 18 in der insbesondere aus den Figuren 11 und 12 ersichtlichen Weise eingebracht, wodurch die Gasaustrittsöffnungen 13 definierter Größe gebildet werden. Am Ende der Einschnitte 17 in Umfangsrichtung befinden sich jeweils die Übergangslinien 22 vom verformten zum unverformten Rohrmaterial.

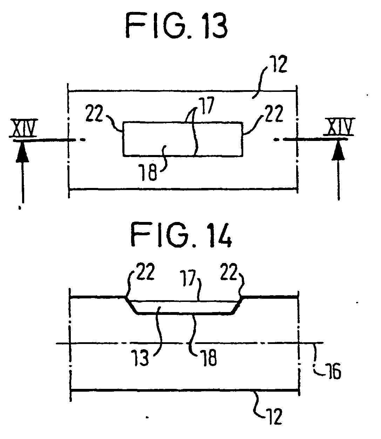

Nach den Figuren 13 und 14 verlaufen jeweils zwei gleich lange und parallel zueinander angeordnete Einschnitte 17 parallel zur Rohrachse 16, ähnlich wie das bei der Ausführungsform nach den Figuren 7 bis 9 der Fall war. Im vorliegenden Ausführungsbeispiel befindet sich jedoch die Eindrückung 18 zwischen den Einschnitten 17, während das Material außerhalb der Einschnitte 17 unverformt ist.

Da die Eindrückungen 18 in Längsrichtung des Gasfüllrohres 12 eine größere Länge als das ursprüngliche Rohrmaterial haben, erfolgt insbesondere im Übergangsbereich zum unverformten Rohrmaterial außer einer reinen Biegung - wie bei den übrigen Ausführungsbeispielen - auch eine bleibende Dehnung des Materials des Gasfüllrohrs 12.

## Patentansprüche

1. Airbagvorrichtung für Kraftfahrzeuge, insbesondere Seiten-Airbagvorrichtung, mit einem Gasgenerator (11) und einem daran angeschlossenen Gasfüllrohr (12), das in vorbestimmten Abständen mit Gasaustrittsöffnungen (13) versehen und mit einem sich über zumindest einen größeren Teil seiner Länge erstreckenden aufblähbaren Gassack (14) verbunden ist, wobei die Gasaustrittsöffnungen (13) durch Einschnittte (17) in der Wand des Gasfüllrohres (12) und durch Eindrückungen (18) des Rohrwandmaterials zumindest auf einer Seite der Einschnitte (17) gebildet sind,
**dadurch gekennzeichnet, daß**
- die Einschnitte (17) zumindest im wesentlichen parallel zur Rohrachse (16) verlaufen,
- pro Gasaustrittsöffnung (13) im geringen Abstand zwei Einschnitte (17) vorgesehen sind und dabei
- entweder die Eindrückungen (18) zwischen den Einschnitten (17) vorgesehen sind und das Rohrmaterial außerhalb der Einschnitte (17) unverformt ist,
- oder die Eindrückungen (18) außerhalb der Einschnitte (17) vorgesehen sind und das Rohrmaterial zwischen den Einschnitten (17) unverformt ist.

2. Vorrichtung nach Anspruch 1,
**dadurch gekennzeichnet,**
**daß** die Einschnitte (17) geradlinig sind.

3. Vorrichtung nach Anspruch 1 oder 2,
**dadurch gekennzeichnet, daß** das vom Gasgenerator (11) abgewandte Ende des Gasfüllrohres (12) durch eine oder mehrere Eindrückungen (19) entweder ganz oder teilweise verschlossen ist.

4. Vorrichtung nach einem der vorhergehenden Ansprüche,
**dadurch gekennzeichnet,**
**daß** das Gasfüllrohr (12) generatorseitig aufgeweitet oder angestaucht und so am Gehäuse des Generators (11) befestigt ist.

5. Vorrichtung nach einem der vorhergehenden Ansprüche,
**dadurch gekennzeichnet,**
**daß** das generatorseitige Ende des Gasfüllrohres (12) so bearbeitet ist, daß es gegenüber dem Gehäuse des Generators (11) auch eine Verdrehsicherung gewährleistet.

6. Vorrichtung nach einem der vorhergehenden Ansprüche,
**dadurch gekennzeichnet,**
**daß** das Gasfüllrohr entlang des Dachholmes des Kraftfahrzeuges verlegbar ist.

7. Vorrichtung nach Anspruch 6,
**dadurch gekennzeichnet,**
**daß** das Gasfüllrohr (12) durch eine Vielzahl von Biegestellen und geraden Abschnitten der Kontur des Dachholms angepaßt ist.

8. Vorrichtung nach einem der vorhergehenden Ansprüche,
**dadurch gekennzeichnet,**
**dass** der Gassack (15) aus einzelnen Zellen (15) besteht, von denen jede einer Gasaustrittsöffnung (13) zugeordnet ist.

9. Vorrichtung nach einem der vorhergehenden Ansprüche,
**dadurch gekennzeichnet,**
**daß** die Gasaustrittsöffnungen (13) in Form und/oder Größe derart variieren, daß die einzelnen Bereiche des Gassacks (14) bei Zündung des Generators in gewünschter Weise nacheinander oder gleichzeitig aufgebläht werden.

10. Vorrichtung nach einem der vorhergehenden Ansprüche,
**dadurch gekennzeichnet,**
**daß** an beiden Enden des Gasfüllrohres (12) ein Gasgenerator (11) angeschlossen ist.

11. Vorrichtung nach einem der vorhergehenden Ansprüche,
**dadurch gekennzeichnet,**
**daß** das Gasfüllrohr (12) gleichzeitig der Befestigung des Gassackes (14) dient.

12. Vorrichtung nach einem der vorhergehenden Ansprüche,
**dadurch gekennzeichnet,**
**daß** das Gasfüllrohr (12) aus duktilem Metall besteht.

## Claims

1. Airbag device for motor vehicles, in particular side airbag device, with a gas generator (11) and a gas-filling tube (12) which is connected thereto, is provided at predetermined distances with gas outlet openings (13) and is connected to an inflatable airbag (14), extending over at least a relatively large part of its length, the gas outlet openings (13) being formed by incisions (17) in the wall of the gas-filling tube (12) and by indentations (18) in the tube wall material at least on one side of the incisions (17), **characterized in that**
- the incisions (17) run at least essentially parallel to the tube axis (16),
- two incisions (17) are provided at a small distance per gas outlet opening (13) and,
- either the indentations (18) are provided between the incisions (17) and the tube material outside the incisions (17) is undeformed,
- or the indentations (18) are provided outside the incisions (17) and the tube material between the incisions (17) is undeformed.

2. Device according to Claim 1, **characterized in that** the incisions (17) are rectilinear.

3. Device according to Claim 1 or 2, **characterized in that that** end of the gas-filling tube (12) which faces away from the gas generator (11) is either entirely or partially closed by one or more indentations (19).

4. Device according to one of the preceding claims, **characterized in that** the gas-filling tube (12) is expanded or compressed on the generator side and is fastened in this manner to the housing of the generator (11).

5. Device according to one of the preceding claims, **characterized in that** the generator end of the gas-filling tube (12) is machined in such a manner that it also ensures a means of securing against rotation in relation to the housing of the generator (11).

6. Device according to one of the preceding claims, **characterized in that** the gas-filling tube can be laid along the roof strut of the motor vehicle.

7. Device according to Claim 6, **characterized in that** the gas-filling tube (12) is matched to the contour of the root strut by means of a multiplicity of bending points and straight sections.

8. Device according to one of the preceding claims, **characterized in that** the airbag (15) is composed of individual cells (15) each of which is assigned to a gas outlet opening (13).

9. Device according to one of the preceding claims, **characterized in that** the gas outlet openings (13) vary in shape and/or size in such a manner that, when the generator is ignited, the individual regions of the airbag (14) are inflated in the desired manner successively or simultaneously.

10. Device according to one of the preceding claims, **characterized in that** a gas generator (11) is connected to the two ends of the gas-filling tube (12).

11. Device according to one of the preceding claims, **characterized in that** the gas-filling tube (12) serves at the same time to fasten the airbag (14).

12. Device according to one of the preceding claims, **characterized in that** the gas-filling tube (12) is composed of ductile metal.

## Revendications

1. Dispositif d'airbag pour véhicule automobile, en particulier dispositif d'airbag latéral, avec un générateur de gaz (11) et un tuyau de remplissage de gaz (12) raccordé à celui-ci, qui est muni d'ouvertures de sortie de gaz (13) selon des espacements prédéterminés et raccordé avec un sac de gaz (14) gonflable s'étendant sur au moins une plus grande partie de sa longueur, dans lequel les ouvertures de sortie de gaz (13) sont formées par des encoches (17) dans la paroi du tuyau de remplissage de gaz (12) et par des impressions (18) du matériau de paroi de tuyau au moins sur un côté des encoches (17),
**caractérisé en ce que**
- les découpes ou encoches (17) s'étendent au moins sensiblement parallèlement à l'axe de tuyau (16),
- deux encoches (17) sont prévues par ouverture de sortie de gaz (13) selon un faible espacement et dans lequel
- soit les impressions (18) sont prévues entre les encoches (17) et le matériau de tuyau est déformé à l'extérieur des encoches (17),
- soit les impressions (18) sont prévues à l'extérieur des encoches (17) et le matériau de tuyau n'est pas déformé entre les encoches (17).

2. Dispositif selon la revendication 1, **caractérisé en ce que** les encoches (17) sont rectilignes.

3. Dispositif selon la revendication 1 ou 2, **caractérisé en ce que** l'extrémité du tuyau de remplissage de gaz (12) opposée au générateur de gaz (11) est obturée par une ou plusieurs empreintes (19), soit totalement, soit partiellement.

4. Dispositif selon l'une des revendications précédentes, **caractérisé en ce que** le tuyau de remplissage de gaz (12) est élargi ou refoulé côté générateur et se trouve ainsi fixé sur le boîtier du générateur (11).

5. Dispositif selon l'une des revendications précédentes, **caractérisé en ce que** l'extrémité côté générateur du tuyau de remplissage de gaz (12) est travaillée de sorte que, par rapport au boîtier du générateur (11), il assure en plus une protection contre la torsion.

6. Dispositif selon l'une des revendications précédentes, **caractérisé en ce que** le tuyau de remplissage de gaz est déplaçable le long du longeron de toiture du véhicule automobile.

7. Dispositif selon la revendication 6, **caractérisé en ce que** le tuyau de remplissage de gaz (12) est adapté, par l'intermédiaire d'une pluralité de points de flexion et de tronçons rectilignes, au contour du longeron de toiture.

8. Dispositif selon l'une des revendications précédentes, **caractérisé en ce que** le sac de gaz (15) consiste en des cellules individuelles (15) auxquelles est respectivement affectée une ouverture de sortie de gaz (13).

9. Dispositif selon l'une des revendications précédentes, **caractérisé en ce que** les ouvertures de sortie de gaz (13) varient dans la forme et/ou la dimension, de sorte que les différentes zones du sac de gaz (14) lors de l'allumage du générateur sont gonflées de la manière souhaitée successivement ou simultanément.

10. Dispositif selon l'une des revendications précédentes, **caractérisé en ce que** les deux côtés du tuyau de remplissage de gaz (12) sont raccordés à un générateur de gaz (11).

11. Dispositif selon l'une des revendications précédentes, **caractérisé en ce que** le tuyau de remplissage (12) sert simultanément à la fixation du sac de gaz (14).

12. Dispositif selon l'une des revendications précédentes, **caractérisé en ce que** le tuyau de remplissage de gaz (12) consiste en un métal ductile.
